(19) Europäisches Patentamt
European Patent Office
Office européen des brevets

(11) Publication number: **0 190 859**
**A2**

(12) # EUROPEAN PATENT APPLICATION

(21) Application number: 86300530.2

(22) Date of filing: 27.01.86

(51) Int. Cl.$^4$: **G 01 M 11/00**

(30) Priority: 08.02.85 GB 8503299

(43) Date of publication of application: 13.08.86 Bulletin 86/33

(84) Designated Contracting States: AT BE CH DE FR IT LI LU NL SE

(71) Applicant: **International Standard Electric Corporation**
**320 Park Avenue**
**New York New York 10022(US)**

(72) Inventor: **Epworth, Richard Edward**
**82, Havers Lane**
**Bishops Stortford Herts. CM23 3PD(GB)**

(72) Inventor: **Smith, David Francis**
**49 Parsonage Leys**
**Harlow Essex(GB)**

(72) Inventor: **Wright, Stephen**
**11 Venetia Road**
**London N4(GB)**

(74) Representative: **Ruffhead, Philip Geoffrey**
**ITT-UK Patent Department Maidstone Road Foots Cray**
**Sidcup DA14 5HT(GB)**

(54) **Coherent homodyne reflectometer.**

(57) A coherent optical time domain reflectometer of the kind including a light source (10), an optical coupling means (13) whereby light from the source is coupled into an optical transmission medium (14) and light reflected from the transmission medium is mixed together with a reference optical signal and is coupled to a detector (18). The coupler (13) is a 3 × 3 coupler with the mixed reflected light and reference signal being coupled out via two adjacent outputs to two respective inputs (16, 17) of a balanced detector (18).

*Fig. 1.*

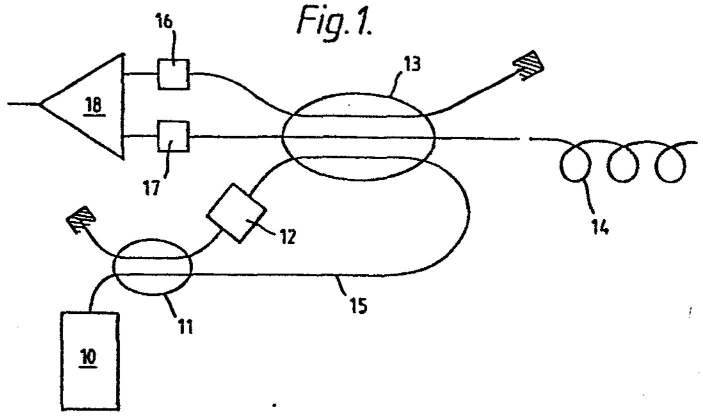


EP 0 190 859 A2

Croydon Printing Company Ltd.

# COHERENT HOMODYNE REFLECTOMETER

This invention relates to a coherent homodyne reflectometer for optical transmission lines, e.g. optical fibres.

Optical Time Domain Reflectometry (OTDR) is a technique used for fault location, and sensing operations, on long lengths of optical fibre. These applications require the utmost in receiver sensitivity. At long wavelengths, coherent detection is the only technique that can provide sensitivity approaching quantum limits. A coherent reflectometer using a bidirectional 2 x 2 fused fibre optical coupler is disclosed in our co-pending British patent application No. 8310158. The output from a laser light source is passed through a phase modulator to one of a pair of ports at one end of a 2 x 2 bidirectional coupler. A fibre under test is coupled to one of a pair of parts at the other end of the coupler. Backscattered light from the fibre is mixed with unmodulated light from the laser provided as a local oscillator signal at the second port at the other end of the coupler and the mixed light is output from the second port at the one end of the coupler and fed to a photodetector.

Recent progress has led to the use of very long lengths of single mode fibre at long wavelengths, but this pprogress increases the problems of OTDR. In particular, it highlights the need for detector sensitivity. For instance,

calculation would suggest that the backscattered reflection of a single 1 μs pulse from a section at the end of a 20 dB fibre contains an energy significantly less than the energy of a single photon. For comparison, the sensitivity of the best long wavelength detectors, used as incoherent detectors, is at present still more than two orders above the single photon level.

By contrast, coherent detection, as disclosed in the aforementioned patent application, is capable of giving quantum noise limited sensitivity, even with an imperfect detector. Upon detection, a beat signal is produced in the photocurrent, at the difference frequency between signal and local oscillator, with a magnitude dependent upon the product of the two signals. If the local oscillator signal is made large enough, the received signal can be multiplied up to be larger than any receiver noise.

According to the present invention in its broadest aspect a coherent optical time domain reflectometer of the kind including a light source and an optical coupling means whereby light from the source is coupled into an optical transmission medium and light reflected from the transmission medium is mixed together with a reference optical signal and is coupled to a detector is characterised in that the coupler is a 3 x 3 coupler with the mixed reflected light and reference signal being coupled out via two adjacent outputs to two respective inputs of a balanced detector.

Embodiments of the invention will now be described with reference to the accompanying drawings, in which:-

Figure 1 illustrates a coherent homodyne

reflectometer utilising an external modulator with the light source,

Figure 2 illustrates the division of power in a 3 x 3 optical fibre coupler,

Figure 3 illustrates phase shift during coupling in a 3 x 3 coupler,

Figure 4 is a vector diagram, illustrating additon of signal amplitudes with coupling phase shift,

Figure 5 illustrates output amplitudes of a 3 x 3 coupler for a given set of input conditions,

Figuire 6 illustrates graphically the phase relationships of the fringes at the outputs of a 3 x 3 couler,

Figures 7 and 8 illustrate coherent addition of signals subject to phase shift during coupling,

Figure 9 is a vector diagram relating to Figure 7,

Figure 10 is another vector diagram relating to Figure 8,

Figure 11 is a further vector diagram relating to Figure 8,

Figure 12 is a schematic block diagram of a differential cross multiplier circuit,

Figure 13 is a schematic block diagram of a circuit for generating orthogonal phase terms,

Figure 14 illustrates the application of a 3 x 3 coupler in a coherent reflectometer,

Figure 15 illustrates a balanced detector, and

Figure 16 illustrates an alternative reflectometer using coherence modulation of the light source.

In the arrangement shown in Figure 1 light

from a continously running laser 10 is fed via a 2 x 2 coupler 11, modulator 12 and 3 x 3 bidirectional coupler 13 to an optical fibre 14 under test. Part of the laser output is coupled out via fibre link 15 to form a local oscillator reference signal which is fed into the other end of the 3 x 3 coupler 13. Backscatter energy from the fibre 14 is mixed in coupler 13 with the local oscillator signal and the mixed signals are coupled out on two ports of the coupler 13 to feed two photodetectors 16, 17. The photodetectors in turn feed the two inputs of a differential amplifier 18. Operation of the moedulator 12, e.g. a Bragg cell or liquid crystal modulator, causes the light to be launched into the fibre 14 in the form of an amplitude pulsed optical signal. Alternatively the external modulator 12 can be a phase modulator, to provide a frequency offset by serrodyne operation. This could either provide a large frequency offset except during a pulse period, or just shift the signal out of band during the pulse period, in effect sending an essentially "negative" pulse. The instrument would therefore be launching light continuously into the test fibre and then a "null" pulse would be launched into the fibre and propagate down it. The difference between the mean value of backscatter and the actual signal level at a particular delay would be due to the absence of backscatter from that range cell.

A 3 x 3 bidirectional coupler provides a convenient method of demodulating phase changes present in the signals returned from the fibre under test. In this application, the coupler is ideally envisaged as having equal coupling coefficients between each guide and 'even splitting' of the power fed into one port, i.e. one third total power at

each output, as indicated in Figure 2, although in practice the coupling coefficients may be unequal.

By looking at the symmetrical situation depicted in Figure 3, we can demonstrate that the phase shift undergone during coupling from one guide to another is $120^o$. If the input waves at ports 1 and 2 are in phase and have the same unit amplitude then both supply a contribution to output II in phase with each other. The total amplitude is $1/\sqrt{3} + 1/\sqrt{3}$ due to the even splitting and this provides a power output of 4/3 units. Because of the symmetry the remaining 2/3 must be evenly distributed between ports I and III. With the aid of the vector diagram in Figure 4 it can be shown that the only way that two vectors of amplitude $1/\sqrt{3}$ can add to give a resultant of $1/\sqrt{3}$, is if they form an equilateral triangle and hence have a phase angle of $120^o$. Hence the coupling phase shift is $120^o$.

To apply this to passive demodulation of an interferometer, consider Figure 5. The output amplitudes at ports I, II, III given the input conditions shown in Figure 5 are as follows:-

$$\text{I} \quad : \quad 1/\sqrt{3}\ (e^{i\xi} + e^{i2\pi/3})$$

$$\text{II} \quad : \quad 1/\sqrt{3}\ (e^{i(\xi + 2\pi/3)} + e^{i2\pi/3})$$

$$\text{III} \quad : \quad 1/\sqrt{3}\ (1 + e^{i(\xi + 2\pi/3)})$$

To obtain the output powers we multiply each by its complex conjugate, giving:-

$$P_I = 2/3\ (1 - 1/2\cos\xi + \sqrt{3/2}\sin\xi\ )$$
$$P_{II} = 2/3\ (1 + \cos\xi\ )$$
$$P_{III} = 2/3\ (1 - 1/2\cos\xi - \sqrt{3/2}\sin\xi\ )$$

If we form new outputs

$$P'_I = P_I + P_{III}$$
$$P'_{II} = P_I - P_{III}$$

we get

$$P'_I = 2/3\ (2 - \cos\xi\ )$$
$$P'_{II} = 2/3\ (\sqrt{3}\sin\xi\ )$$

If we now define sensitivities

$$S_1 \qquad dP_I'/d\xi = 2/3\sin\xi$$
$$S_2 \qquad dP_{II}'/d\xi = 2/\sqrt{3}\cos\xi$$

Hence if $\xi \rightarrow 0$ $S_1 \rightarrow 0$ but $S_2 \rightarrow$ maximum so we never lose sensitivity in both arms at once.

The fringes at the outputs of the 3 x 3 interferometer are 120$^o$ out of phase with each other, as seen from Figure 6. This can be seen by representing the output amplitudes on the vector diagram of Figure 7 where (1) and (2) denote the 120$^o$ phase shift undergone by inputs 1 and 2 when they couple across to the other arms of the coupler. Adding these coherently gives the resultant outputs shown in Figure 8. Each output in Figure 7 can be represented vectorially as shown in Figure 9. Using the appropriate sums as shown in Figure 8 the resultant vectors are as shown in Figure 10. These vectors represent the straight through and the coupled amplitudes for two different inputs.

Phases

$\phi = 1/2\ (\xi + 120^o)$

$\theta = 1/2\ (\xi + 120^o) = \phi$

$\alpha = \xi/2 + 120^o = \phi + 60^o$

Amplitudes

$A_1 = 2/\sqrt{3}\ \cos\ (60^o + 1/2\,\xi)$

$A_3 = 2/\sqrt{3}\ \cos\ (60^o - 1/2\,\xi)$

$A_2 = 2/\sqrt{3}\ \cos\ (1/2\,\xi)$

Looking at output powers we get:

$P_I = 2/3(1 + \cos(120^o + \xi))$

$P_{III} = 2/3(1 + \cos(120^o - \xi))$

$P_{II} = 2/3(1 + \cos \xi)$

The symmetry of this situation can be highlighted if one notices that the output powers can be depicted as a set of rotating vectors each separated by $120^o$.

The output power is the projection onto the P axis of the appropriate P vector as it rotates with $\xi$ (Figure 11). Notice that the D.C. component is taken care of by placing the origin of the vectors at P = 2/3. Note also that the three vectors add together in such a way that the resultant is zero on top of the D.C. terms of each. If the vectors resolve to zero, then the sum of their projections along any axis must also equal zero. This is simply a statement of conservation of energy. With the aid of this vector diagram, we can show how we can demodulate the phase change $\xi$. It is easily seen that if inputs cos $\xi$ and sin $\xi$ are supplied to the circuit block shown in Figure 12 we will get an output linearly proportional to $\xi$. Each input is differentiated d/dt and multipled by

the other input. The two products thus obtained are subtracted one from the other and the difference is integrated.

Figure 11 shows that any vector parallel to $P_{II}$ projects onto the P axis producing an output proportional to cos $\xi$ and hence any vector orthogonal to $P_{II}$ produces a quadrature term, i.e. proportional to sin $\xi$ .

Two such vectors can be formed by taking the vector sums

$$P_I + P_{III} \rightarrow \cos \xi + \text{ DC term}$$
$$P_I - P_{III} \rightarrow \sin \xi$$

The DC term can be nulled by subtracting $2P_{II}$ from $P_I + P_{III}$.

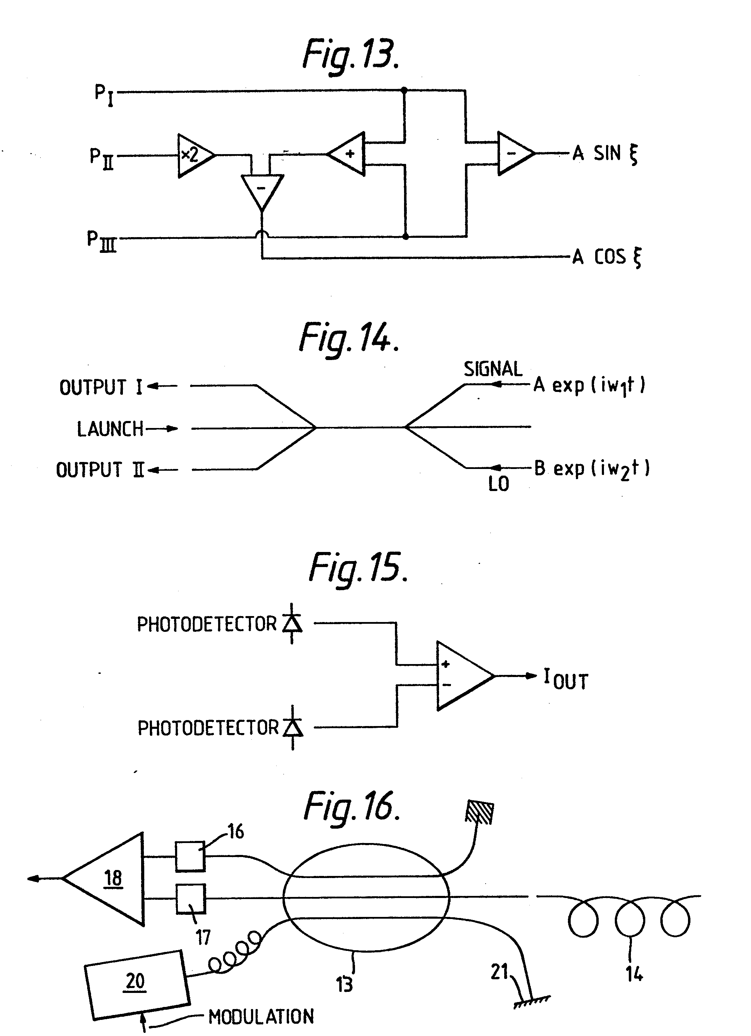

To obtain the sin $\xi$ and cos $\xi$ terms the inputs $P_I$, $P_{II}$ and $P_{III}$ are fed into the circuit shown in Figure 13. $P_I$ and $P_{III}$ are differenced to form A sin $\xi$ . $P_I$ and $P_{III}$ are summed and the sum is then differenced with $2 \times P_{II}$ to form the A cos $\xi$ term.

To utilise the 3 x 3 coupler in the reflectometer of Figure 1 consider Figure 14. Let us denote the signal returned from the fibre by A exp $(iw_1t)$ and the local oscillator by B $\exp(iw_2t)$. If we denote the phase shift on coupling by $\phi$ then coherent addition gives the following output amplitudes at I and III

$$\text{Output I} \quad 1/\sqrt{3}\ (A \exp(iw_1t) + B \exp(i[w_2t+\phi]))$$
$$\text{II} \quad 1/\sqrt{3}\ (A \exp(i[w_1t+\phi]) + B \exp(iw_2t))$$

The powers at the outputs are

$$\text{I} \quad : \quad 1/3\ (A^2+B^2+2AB\cos(\Delta wt-\phi))$$
$$\text{II} \quad : \quad 1/3\ (A^2+B^2+2AB\cos(\Delta wt+\phi)) \qquad w=w_1-w_2$$

These expressions have two parts

(i) D.C. component $A^2 + B^2$

(ii) Fluctuating component $2AB\cos(\Delta w\pm\phi)$

It is evident that the fluctuating components are out of phase by $2\phi$ which in the case of a 3 x 3 coupler is $240^o$. Any excess local oscillator intensity noise can be represented by making B a slowly varying function of time. The dominant component of noise is then contained in the $B^2$ term. The availability of two outputs enables the device to be used in a balanced detector configuration as shown in Figure 15. What this means is that the components of two beat signals I and II which are out of phase add constructively, whereas the in-phase local-oscillator-intensity noise components of the two photocurrents tend to cancel. This is easily seen from the expressions for the output powers. The terms $A^2 + B^2$ which contain the noise components disappear and we are left with

$$I_{out} = \frac{2}{\sqrt{3}} AB \sin\Delta wt$$

The beat signals in a 3 x 3 coupler are $2\phi = 240^o$ out of phase, hence we do not have perfect constructive interference of these signals. A phase difference of $180^o$ would be required for this which would require a 2 x 2 coupler, but clearly a 2 x 2 coupler cannot be used in this configuration.

As an alternative to the use of an external

modulator, Figure 1, the arrangement of Figure 16 can be implemented with coherent modulation of the laser light source 20. In this arrangement a laser is used in which the laser line is narrowed by Rayleigh backscatter. It is quite straightforward to decohere the laser for a short time merely by modulating its drive current. Accordingly it is possible to use a variation of the "null" pulse technique, where the laser is modulated for a brief period to provide a probe of incoherent light. The local oscillator signal can now simply be provided by reflection from a mirror 21 at one of the spare ports of the coupler. In this arrangement no additional 2 x 2 coupler is required. Processing from the balanced detector 18 can be achieved simply by a.c. coupling the output into an integrator.

CLAIMS:

1. A coherent optical time domain reflectometer of the kind including a light source and an optical coupling means whereby light from the source is coupled into an optical transmission medium (14) and light reflected from the transmission medium is mixed together with a reference optical signal and is coupled to a detector, characterised in that the coupler (13) is a 3 x 3 coupler with the mixed reflected light and reference signal being coupled out via two adjacent outputs to two respective inputs (16, 17) of a balanced detector (18).

2. A reflectometer according to claim 1 characterised in that the light source is coupled via an input and one output of a 2 x 2 coupler (11) to one input of the 3 x 3 coupler (13) with a modulator (12) interposed between the couplers, light from the second output of the 2 x 2 coupler (11) being coupled into one output of the 3 x 3 coupler (13) to provide the reference optical signal to be mixed with the light reflected from the transmission medium (14).

3. A reflectometer according to claim 1 characterised in that the light source is directly modulated.

4. A reflectometer according to claim 1 characterised in that the reference signal is provided by light reflectd at one of the outputs of the 3 x 3 coupler (13).

5. A reflectometer according to claim 2 characterised in that the modulator (12) is an amplitude modulator.

6. A reflectometer according to claim 2 characterised in that the modulator is a phase

modulator.

7. A reflectometer according to any preceding claim characterised in that the light source is a laser (10).

0190859

Fig. 1.

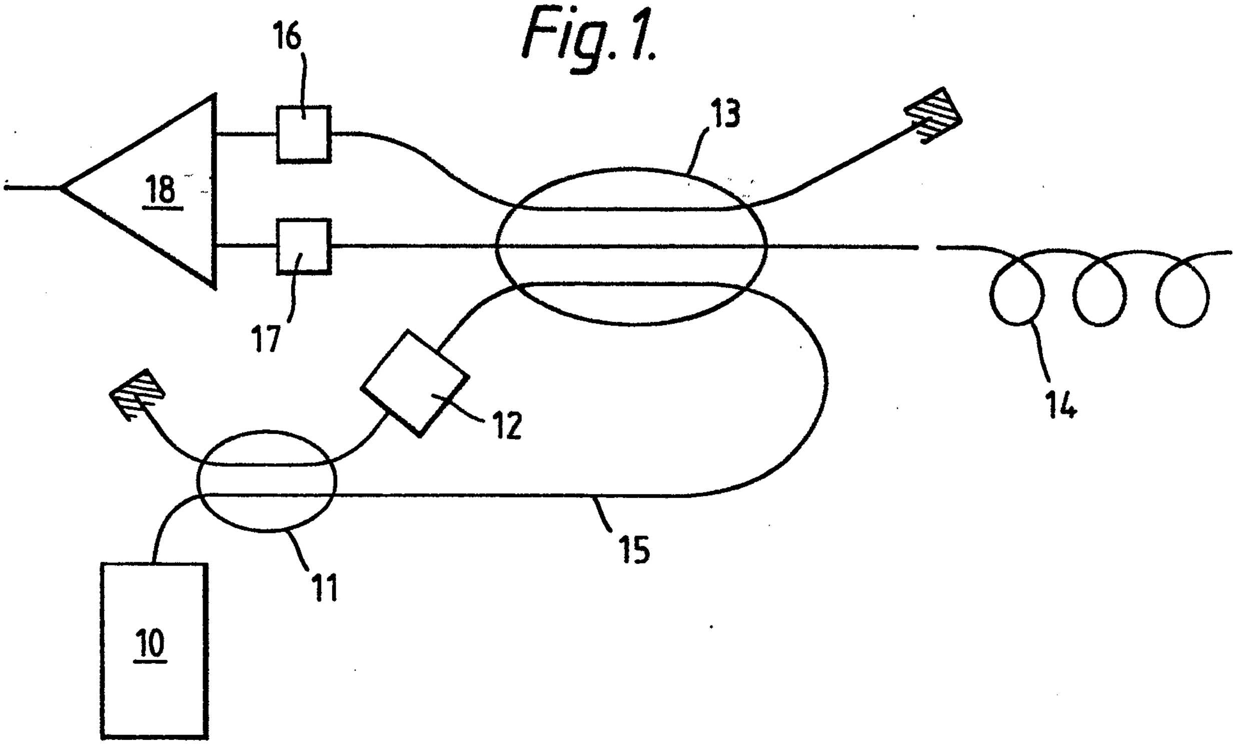


Fig. 2.

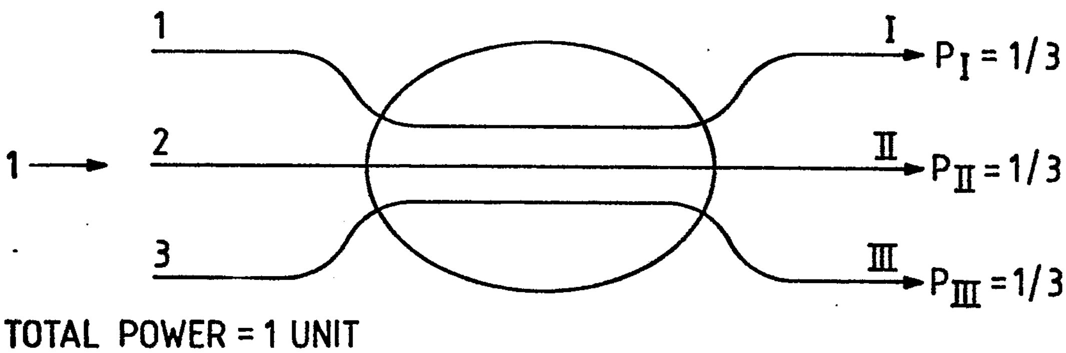


Fig. 3.

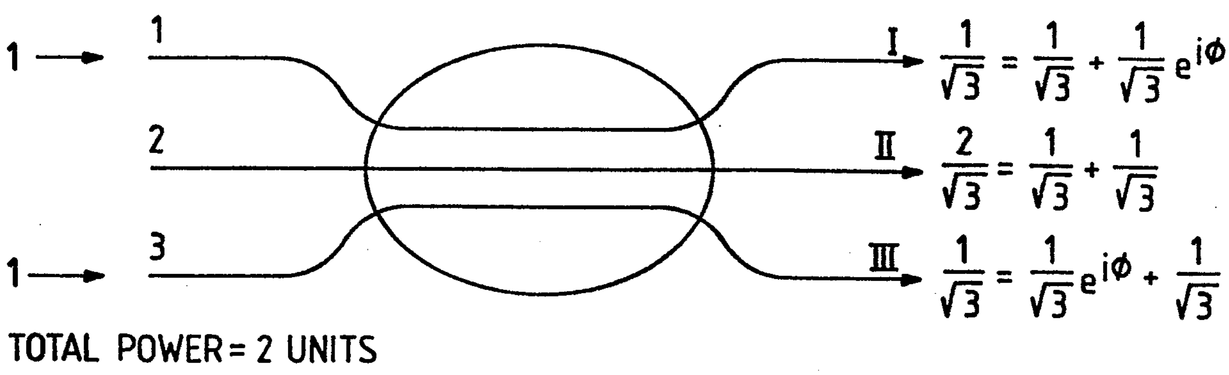

Fig.4.

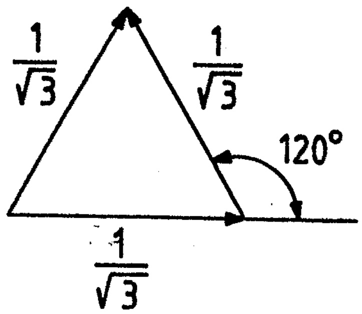


Fig.5.

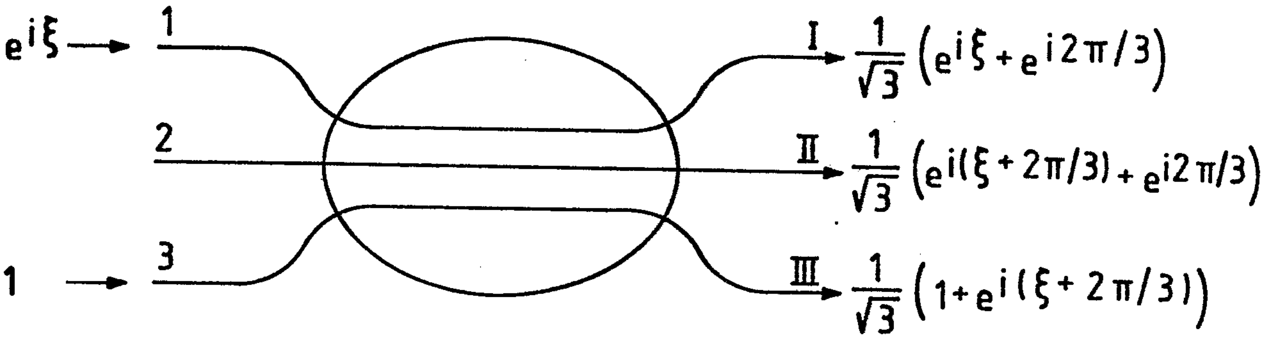


Fig.6.

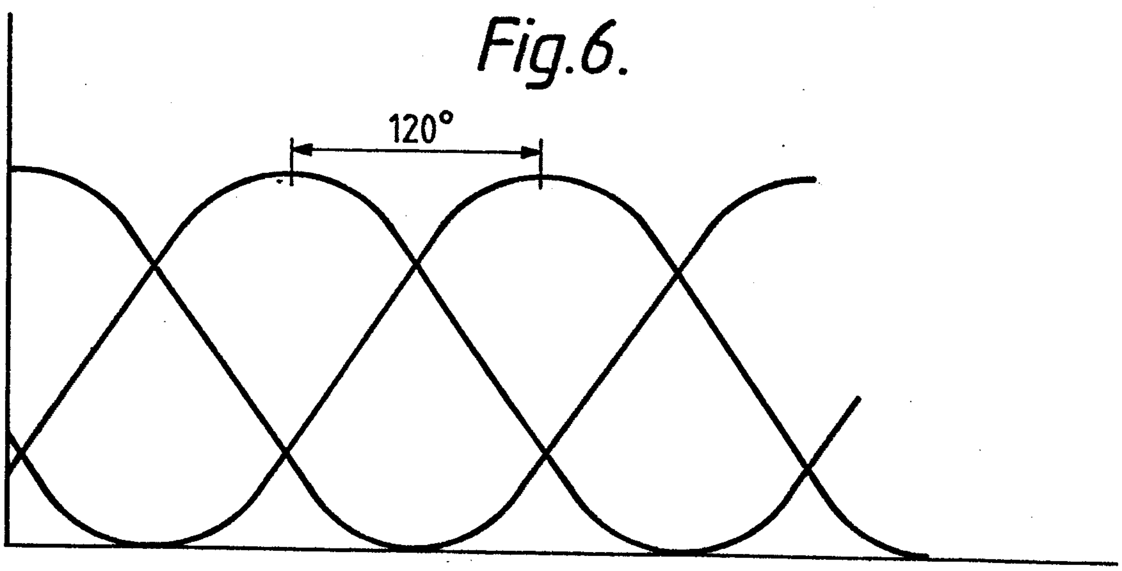


Fig.7.

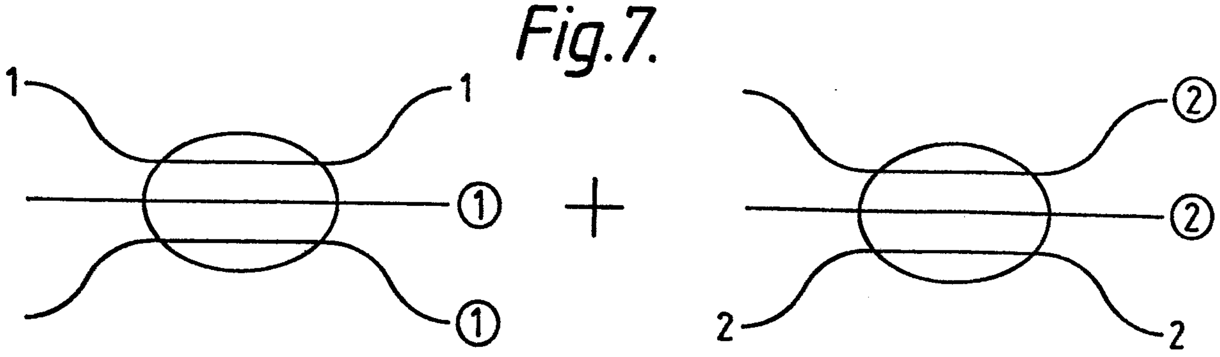

0190859

Fig.8.

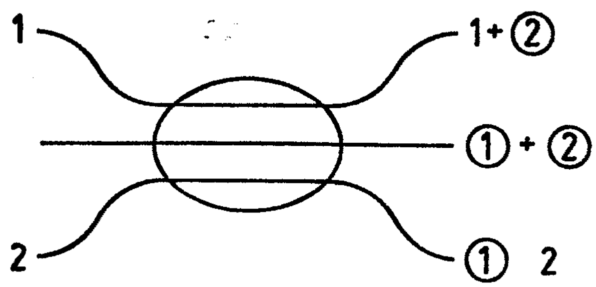


Fig.9.

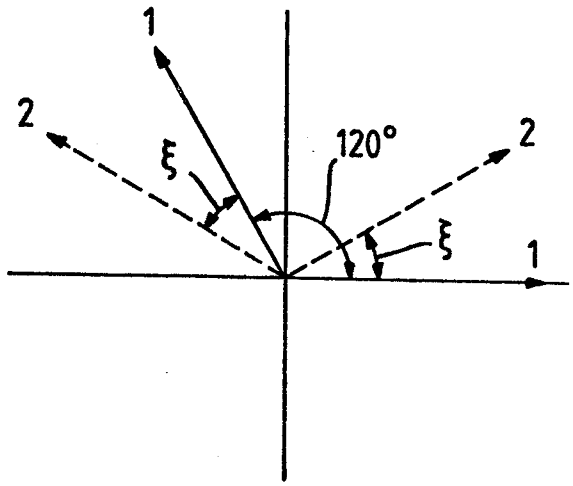


Fig.10.

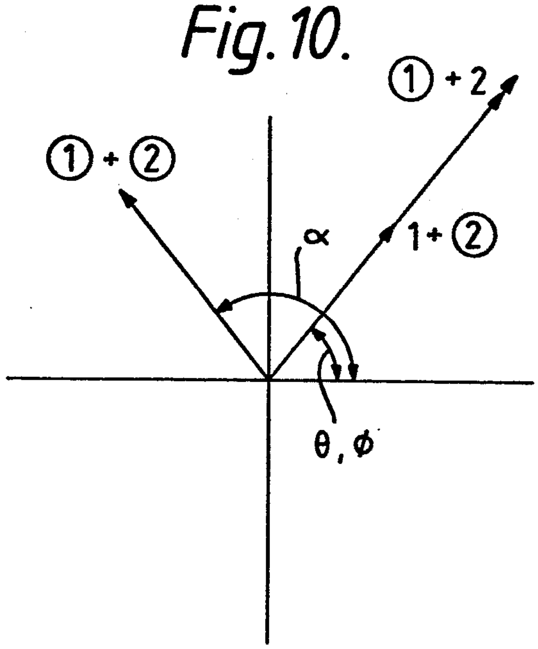


Fig.11.

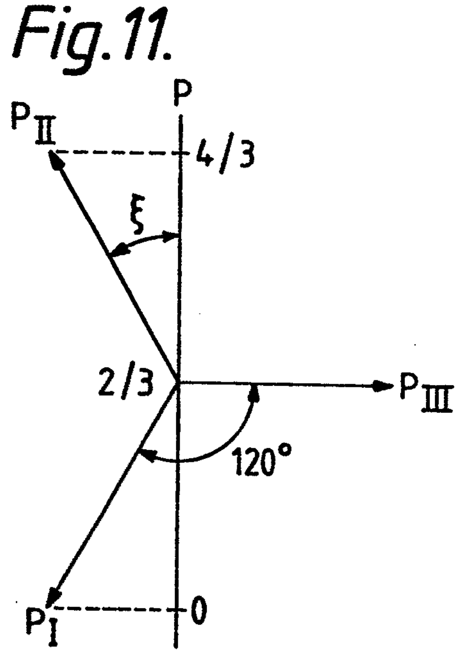


Fig.12.

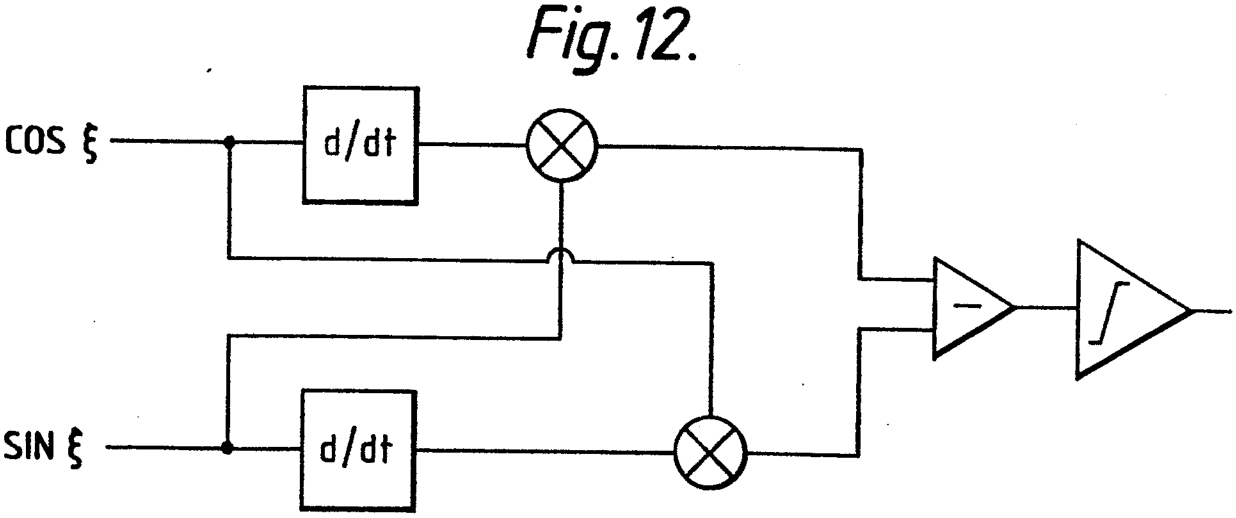

Fig. 13.

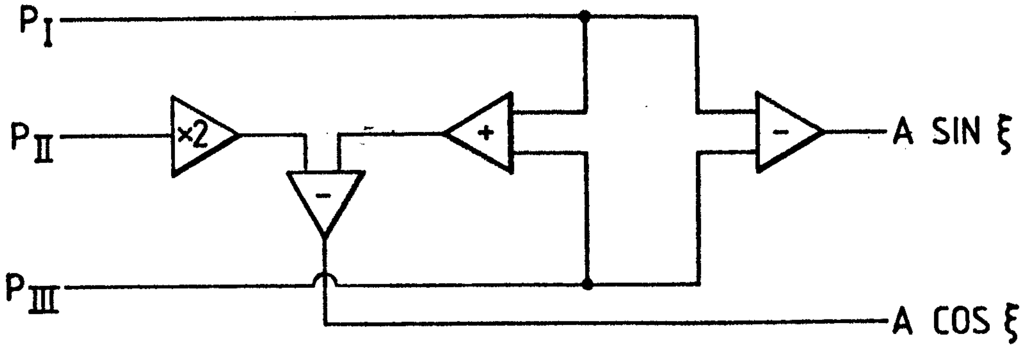


Fig. 14.

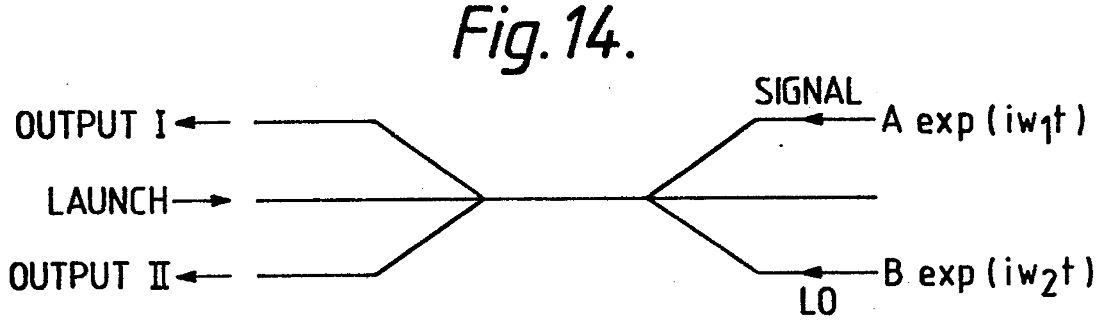


Fig. 15.

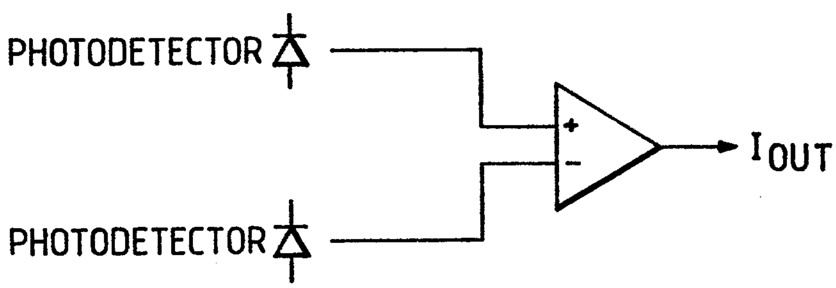


Fig. 16.